# EUROPEAN PATENT APPLICATION

(11) **EP 2 224 529 A1**
(43) Date of publication of application: **01.09.2010**
(21) Application number: 08860966.4
(22) Date of filing: 18.12.2008
(51) Int. Cl.: H01M 8/04, H01M 8/00, F24H 1/00

(54) **COGENERATION SYSTEM**

(30) Priority: 18.12.2007 JP 2007325820
(71) Applicant: Panasonic Corporation, Kadoma-shi Osaka 571-8501 (JP)
(72) Inventor: Shinji MIYAUCHI c/o Panasonic Corporation 1006, Osaka 571-8501 (JP); Noriyuki HARAO c/o Panasonic Corporation 1006, Osaka 571-8501 (JP); Masahiko YAMAMOTO c/o Panasonic Corporation 1006, Osaka 571-8501 (JP); Keiichi SATO c/o Panasonic Corporation 1006, Osaka 571-8501 (JP); Motomichi KATOU c/o Panasonic Corporation 1006, Osaka 571-8501 (JP)
(74) Representative: Leinweber & Zimmermann
(86) International application number: PCT/JP2008/003850
(87) International publication number: WO 2009/078181

(57) **Abstract**

A cogeneration system (100) is provided which has an inverter cooling configuration that enables effective utilization of energy and contributes to an improvement in energy saving performance. To this end, the cogeneration system has a power generator (1); an electric power converter (3); a heat medium path (2) configured to flow a heat medium therein so as to recover exhaust heat from the electric power converter through its cooler (4) and so as to recover exhaust heat from the power generator; a bypass path (8) configured to flow the heat medium, bypassing the cooler; a switch (7); and a controller (12). The controller controls the switch so as to switch the destination of the heat medium from the heat medium path to the bypass path, in a start-up operation or shut-down operation of the cogeneration system, or if the amount of exhaust heat of the electric power converter is smaller than a predetermined exhaust heat amount threshold value.

## Description

### Technical Field

The present invention relates to a cogeneration system for performing power generation and exhaust heat recovery and more particularly to the cooling configuration of an electric power converter provided in a cogeneration system.

### Background Art

Recent cogeneration systems equipped with a fuel cell are capable to produce electric energy and heat energy at the same time in an environmentally friendly way. Moreover, it is relatively easy to construct a recovery mechanism for recovering the heat energy entailed by the power generation and a heat energy feeding mechanism that enables the effective utilization of the heat energy. Therefore, cogeneration systems are suitably used as an electric power and heat supply source for household use.

During the power generating operation of a cogeneration system, the fuel cell is supplied with a fuel gas and an oxidizing gas. At the anode side of the fuel cell, an electrochemical reaction that uses a specified reaction catalyst proceeds so that the hydrogen contained in the fuel gas is converted into electrons and protons. The electrons generated at the anode side go to the cathode side of the fuel cell by way of the load connected to the cogeneration system. The protons generated at the anode side reach the cathode side of the fuel cell after passing through the electrolyte membrane provided for the fuel cell. At the cathode side of the fuel cell, an electrochemical reaction using a specified reaction catalyst proceeds, so that the oxygen contained in the oxidizing gas, the electrons that have passed through the load, and the protons that have passed through the electrolyte membrane are converted into water. With the progress of the series of electrochemical reactions, AC electric power is supplied from the cogeneration system to the load while exhaust heat generated with the progress of the electrochemical reactions is utilized in applications such as hot water supply.

To supply electric power to the load and use the exhaust heat in applications such as hot water supply during the power generating operation of the cogeneration system, not only conversion of DC electric power generated in the fuel cell into AC electric power but also provision of an exhaust heat recovery system for recovering exhaust heat from the fuel cell and a hot water storage system for using the exhaust heat in applications such as hot water supply are required. Therefore, the conventional cogeneration systems are provided with a DC/AC converter (hereinafter referred to as "inverter") for converting the DC electric power generated by the fuel cell into AC electric power. Such known cogeneration systems include a heat exchanger configured to utilize the exhaust heat from the fuel cell and the inverter and a hot water storage tank for storing hot water obtained by heating water in the heat exchanger. The use of the inverter, the heat exchanger and the hot water storage tank etc. makes it possible to provide a cogeneration system serving as an electric power and heat supply source for household use.

The configuration of a commonly known cogeneration system will be briefly described below.

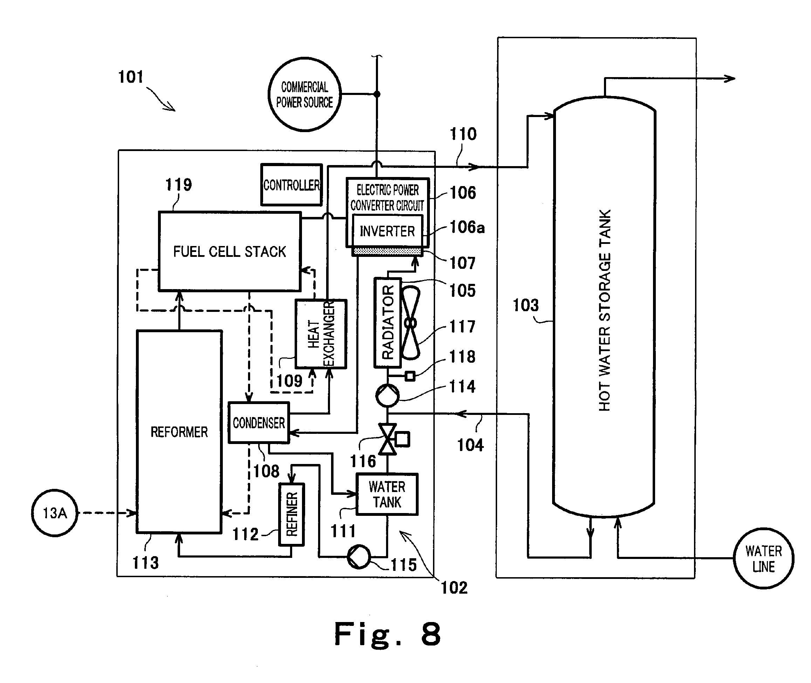

Fig. 8 is a block diagram schematically showing the configuration of a commonly known cogeneration system. It should be noted that Fig. 8 shows a part of the configuration of the commonly known cogeneration system for convenience sake.

As shown in Fig. 8, a water system 102 provided for a known cogeneration system 101 has a first water system that allows hot water from a cold water pipe 104 connected to the bottom of a hot water storage tank 103 to return to the top of the hot water storage tank 103 by way of a radiator 105, a cooler 107 for cooling an inverter 106a, a condenser 108, a heat exchanger 109 and a hot water pipe 110. The water system 102 has a second water system for supplying water from the cold water pipe 104 to a reformer 113 by way of a water tank 111 and a refiner 112. As shown in Fig. 8, the upstream side of the radiator 105 and the downstream side of the water tank 111 are provided with pumps 114, 115 respectively and the upstream side of the water tank 111 is provided with an electromagnetic valve 116.

Herein, the cooler 107 has a general configuration as a cooler in which heat is released by transmitting the exhaust heat of the inverter 106a to hot water supplied from the bottom of the hot water storage tank 103 through the cold water pipe 104 by the heat transmission effect. The radiator 105 is provided with a cooling fan 117 that is started up and shut down by a thermostat 118 that is turned ON and OFF depending on whether the temperature of the hot water flowing into the radiator 105 is not lower than a specified temperature (e.g., 35 degrees centigrade).

As shown in Fig. 8, an electric power converter circuit 106 provided for the conventional cogeneration system 101 has the inverter 106a as a main constituent element. Although not shown in Fig. 8, the electric power converter circuit 106 has, in addition to the inverter 106a, an electronic circuit such as a booster circuit and a sensor group including e.g., a voltage sensor and a current sensor. This electric power converter circuit 106 is configured such that DC electric power output from a fuel cell stack 119 is converted into AC electric power to supply to the load connected to a commercial electric power source.

In the conventional cogeneration system 101, the inverter 106a is designed to be cooled as needed by hot water discharged from the bottom of the hot water storage tank 103, irrespective of the operational temperature of the fuel cell stack 119. The hot water supplied to the cooler 107 is properly cooled by the radiator 105 equipped with the cooling fan 117 so that the inverter 106a can be thoroughly cooled even if the temperature of the hot water stored in the bottom of the hot water storage tank 103 is high (see e.g., Patent Document 1).
Patent Document 1: Japanese Laid-Open Patent Application Publication No. 2004-111209 (Fig. 1)

### Disclosure of the Invention

### Problems to Be Solved by the Invention

As described earlier, the conventional cogeneration system 101 is designed such that hot water discharged from the hot water storage tank 103 cools the inverter 106a as needed irrespective of the amount of exhaust heat that varies depending on the magnitude of the output current of the inverter 106. Therefore, even when the electric power conversion loss of the inverter 106a decreases causing a drop in the amount of exhaust heat of the inverter 106a during the low load operation in which the amount of electric power generated by the fuel cell stack 119 decreases, the hot water recovers the exhaust heat of the inverter 106a. In this case, if the amount of heat radiation of the cooler 107 is higher than the amount of exhaust heat recovered in the cooler 107, the hot water will be cooled by the cooler 107 so that the energy utilization efficiency of the cogeneration system 101 declines.

The invention is directed to overcoming the problem presented by the above conventional cogeneration system and an object of the invention is therefore to provide a cogeneration system having an inverter cooling configuration that enables effective utilization of energy and contributes to an improvement in the energy saving performance of the cogeneration system.

### Means for Solving the Problem

The problem can be solved by a cogeneration system according to the invention, the system comprising:
a power generator;
an electric power converter configured to convert an output electric power of the power generator;
a heat medium path configured to flow said heat medium so as to recover exhaust heat from the electric power converter and from the power generator;
a bypass path configured to branch from the heat medium path, for causing the heat medium to flow so as to bypass the electric power converter;
a switch configured to switch a destination of the heat medium between the bypass path and the heat medium path;
an exhaust heat amount detector configured to detect an amount of exhaust heat of the electric power converter; and
a controller,
   wherein the controller is configured to control the switch so as to switch the destination of the heat medium from the heat medium path to the bypass path, in a start-up operation, in a shut-down operation or when the amount of exhaust heat detected by the exhaust heat amount detector is smaller than a predetermined threshold value.
According to this configuration, the switch is controlled so as to switch the destination of the heat medium from the heat medium path to the bypass path in a start-up or shut-down operation of the cogeneration system or according to the operational state of the electric power converter so that the heat medium can be prevented from being cooled by the cooler provided for the electric power converter. This brings about an improvement in the energy saving performance of the cogeneration system.
In this case, the exhaust heat amount detector may be a first temperature detector for detecting a temperature from the heat medium that has recovered the exhaust heat from the electric power converter, and the controller may control the switch so as to switch the destination of the heat medium from the heat medium path to the bypass path when the temperature detected by the first temperature detector is lower than a first predetermined temperature threshold value.
According to this configuration, if the temperature detected by the first temperature detector is lower than the first predetermined temperature threshold value, the switch is controlled so as to switch the destination of the heat medium from the heat medium path to the bypass path, so that the heat medium can be prevented from being cooled by the cooler provided for the electric power converter with the simple configuration.
In the above case, the exhaust heat amount detector may be a current detector for detecting an output current value from the electric power converter, and the controller may control the switch so as to switch the destination of the heat medium from the heat medium path to the bypass path when the output current value detected by the current detector is smaller than a predetermined current threshold value.
According to this configuration, if the output current value detected by the current detector is smaller than the predetermined current threshold value, the switch is controlled so as to switch the destination of the heat medium from the heat medium path to the bypass path, so that the heat medium can be prevented from being cooled by the cooler provided for the electric power converter with the simple configuration.
In the above case, the exhaust heat amount detector may be an output determiner device for determining an output electric power value from the electric power converter, and the controller may control the switch so as to switch the destination of the heat medium from the heat medium path to the bypass path when the output electric power value determined by the output determiner device is smaller than a predetermined power threshold value.
According to this configuration, if the output electric power value determined by the output determiner device is smaller than the predetermined power threshold value, the switch is controlled so as to switch the destination of the heat medium from the heat medium path to the bypass path, so that the heat medium can be prevented from being cooled by the cooler provided for the electric power converter with the simple configuration.
In the above case, the exhaust heat amount detector may be a second temperature detector for detecting the temperature of the electric power converter, and the controller may control the switch so as to switch the destination of the heat medium from the heat medium path to the bypass path if the temperature detected by the second temperature detector is lower than a second predetermined temperature threshold value.
According to this configuration, if the actual temperature of the electric power converter detected by the second temperature detector is lower than the second predetermined temperature threshold value, the switch is controlled so as to switch the destination of the heat medium from the heat medium path to the bypass path, so that the heat medium can be prevented from being cooled by the cooler provided for the electric power converter without fail with the simple configuration.

In the above case, in a shut-down operation executed when a first abnormality in which the temperature detected by the second temperature detector exceeds a permissible upper limit, occurs, the controller may control the switch so as to make the destination of the heat medium be the heat medium path.

According to this configuration, if the first abnormality occurs in the cogeneration system, the switch is controlled so as to switch the destination of the heat medium from the bypass path to the heat medium path, so that the electric power converter, which is in a high temperature condition in the shut-down operation of the cogeneration system, is cooled by the heat medium. This enables it to minimize damage to the electric power converter.
In the above case, in a shut-down operation executed when a first abnormality occurs, the controller may control the switch so as to make the destination of the heat medium be the heat medium path, and in a shut-down operation executed when a second abnormality which differs from the first abnormality occurs, the controller may control the switch so as to make the destination of the heat medium be the bypass path.
According to this configuration, if the first abnormality occurs in the cogeneration system, damage to the electric power converter can be minimized. If the second abnormality occurs in the cogeneration system and, more particularly, if the cooling water comes into an abnormally high temperature condition owing to the abnormal heat generation of the power generator for example, the switch is controlled so as to switch the destination of the heat medium from the heat medium path to the bypass path so that the power generator, which is in a high temperature condition in the shut-down operation of the cogeneration system, is preferentially cooled by the heat medium. This enables it to minimize damage to the power generator.

In the above case, the heat medium path may be a path going through a cooler provided for the electric power converter and through the power generator.

According to this configuration, the bypass path can be provided within a cooling water circulation path for cooling the power generator so that the power generator and the electric power converter can be connected to each other by the shortest route. Thereby, the cooling water circulation path and the bypass path can be made compact and their circuit can be shortened, so that the energy saving performance of the cogeneration system can be further improved.
In the above case, the cogeneration system may further comprise: a first heat medium path configured to flow a first heat medium for cooling the power generator through the power generator and a heat exchanger provided in the first heat medium path, and the heat medium path may be a second heat medium path that goes through a cooler provided for the electric power converter and through the heat exchanger and flows a second heat medium therein, the second heat medium receiving heat in the cooler provided for the electric power converter and on the heat exchanger.
According to this configuration, since the first heat medium path through which the first heat medium for cooling the power generator flows is separated from the second heat medium path through which the second heat medium for receiving heat in the cooler provided for the electric power converter and in the heat exchanger flows, improved energy saving performance can be achieved while preventing mixing up of the first heat medium with the second heat medium.

In the above case, the power generator may be a fuel cell.

This configuration brings about an improvement in the energy saving performance of cogeneration systems etc. for household use that are provided with a fuel cell as a power generator.

### Effects of the Invention

According to the characteristic cogeneration system configuration of the invention, a cogeneration system with an inverter cooling configuration, which enables effective utilization of energy and contributes to an improvement in the energy saving performance, can be achieved.

### Brief Description of Drawings

Fig. 1 is a block diagram schematically showing a configuration of a cogeneration system according to a first embodiment of the invention.
Fig. 2 is a block diagram schematically showing a configuration of a cogeneration system according to a second embodiment of the invention.
Fig. 3 is a block diagram schematically showing a configuration of a cogeneration system according to a third embodiment of the invention.
Fig. 4 is a block diagram schematically showing a configuration of a cogeneration system according to a fourth embodiment of the invention.
Fig. 5 is a flow chart schematically showing an operation of a cogeneration system according to a sixth embodiment of the invention.
Fig. 6 is a flow chart schematically showing an operation of a cogeneration system according to a seventh embodiment of the invention.
Fig. 7 is a classification chart showing, in classified form, one concrete example of first abnormalities and concrete examples of second abnormalities.
Fig. 8 is a block diagram schematically showing a configuration of a commonly known cogeneration system.

### Explanation of Reference Numerals

- 1:: power generator
- 2:: heat medium path
- 2a:: hot water circulation path
- 2b:: hot water pump
- 3:: electric power converter
- 3a:: inverter
- 4:: cooler
- 5:: heat exchanger
- 6:: hot water storage tank
- 7:: route switch
- 7a:: first connection port
- 7b:: second connection port
- 7c:: third connection port
- 8:: bypath path
- 9:: cooling water circulation path
- 10:: cooling water pump
- 11:: wire
- 12:: controller
- 12a:: output determiner device
- 13:: current detector
- 14a, 14b:: temperature detector
- 15:: load power detector
- 100-400:: cogeneration system
- 101:: cogeneration system
- 102:: water system
- 103:: hot water storage tank
- 104:: cold water pipe
- 105:: radiator
- 106:: electric power converter circuit
- 106a:: inverter
- 107:: cooler
- 108:: condenser
- 109:: heat exchanger
- 110:: hot water pipe
- 111:: water tank
- 112:: refiner
- 113:: reformer
- 114:: pump
- 115:: pump
- 116:: electromagnetic valve
- 117:: cooling fan
- 118:: thermostat
- 119:: fuel cell stack

### Best Mode for Carrying out the Invention

Referring now to the accompanying drawings, the best mode for carrying out the invention will be described in detail.

### (First Embodiment)

First, a configuration of a cogeneration system according to a first embodiment of the invention will be hereinafter explained in detail.

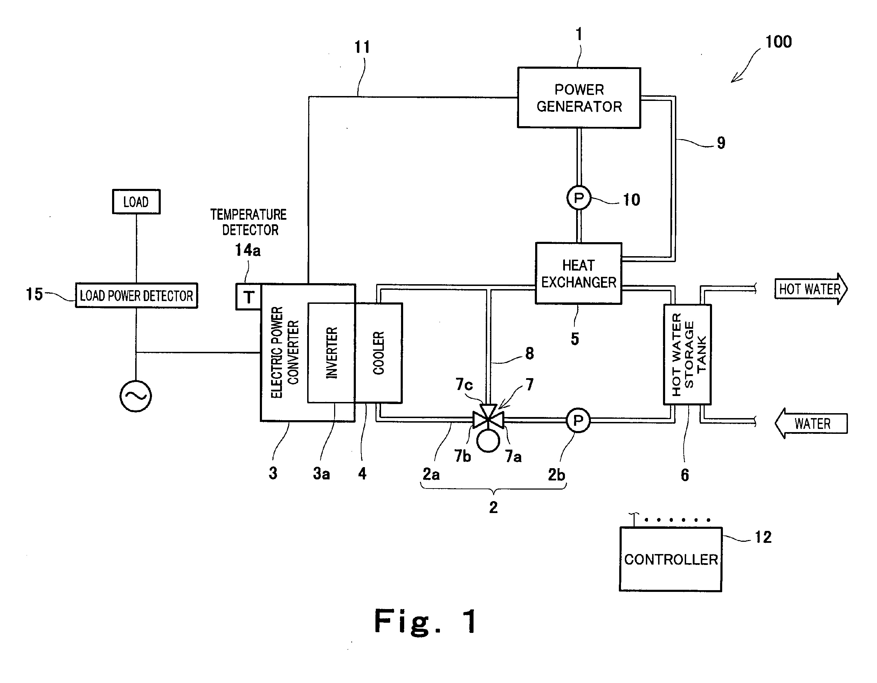

Fig. 1 is a block diagram schematically showing a configuration of a cogeneration system according to the first embodiment of the invention. It should be noted that Fig. 1 shows only constituent elements necessary for description of the invention while omitting other constituent elements. In addition, Fig. 1 shows a configuration of a cogeneration system having a power generator for outputting DC electric power by power generation and an inverter as an electric power converter.

As illustrated in Fig. 1, a cogeneration system 100 according to the first embodiment of the invention has a power generator 1 for outputting DC electric power through power generation that entails exhaust heat; an annular cooling water circulation path 9 in which cooling water for recovering the exhaust heat of the power generator 1 is circulated; a cooling water pump 10 for circulating the cooling water in the cooling water circulation path 9; and a heat exchanger 5 for effecting heat exchange between the cooling water circulated in the cooling water circulation path 9 by the cooling water pump 10 and hot water circulated in a hot water circulation path 2a described later.

As the power generator 1, a fuel cell is used which outputs DC electric power by power generation using hydrogen and oxygen. The hydrogen may be contained in fuel gas generated by a hydrogen generator (not shown) or supplied from a hydrogen cylinder, whereas the oxygen is contained in oxidizing gas such as air. Examples of the fuel cell used herein include polymer electrolyte fuel cells. The power generator 1 is not limited to fuel cells, but any other power generators may be incorporated into the cogeneration system 100 as long as they output DC electric power similar to the DC electric power output by fuel cells. It should be noted that a configuration in which a fuel cell is used as the power generator 1 will be described in a fifth embodiment.

The cogeneration system 100 includes an electric power converter 3 that has, as its main constituent element, an inverter 3a for converting DC electric power output from the power generator 1 into AC electric power (e.g., 50Hz/60Hz) similar to commercial electric power; a temperature detector 14a for detecting temperature as the amount of exhaust heat of the inverter 3a provided in the electric power converter 3; and a cooler 4 for recovering and cooling the exhaust heat of the inverter 3a provided in the electric power converter 3.

Although not shown in Fig. 1, the inverter 3a of the electric power converter 3 has various electric and electronic parts such as resistors, transistors, diodes, capacitors, transformers and coils, and a power semiconductor for performing power conversion operation (e.g., a semiconductor switching element such as a semiconductor rectifier, IGBT and MOSFET). These electric and electronic parts and the power semiconductor are implemented on, e.g., a printed circuit board. A radiator plate made of aluminum is mounted on the heat transmission portion of the power semiconductor. This radiator plate is fixedly attached to the cooler 4.
More concretely, a first cooling unit and a second cooling unit are arranged so as to extend along the opposed ends of the printed circuit board of the inverter 3a, respectively. The first and second cooling units are coupled to each other at their ends by means of a pair of communicating tubes. These first and second cooling units and the pair of communicating tubes constitute the cooler 4. A radiator plate made of alumina and attached to the power semiconductor is secured to the first and second cooling units. In other words, the radiator plate made of alumina and attached to the power semiconductor is in fixed surface contact with the first and second cooling units such that heat is effectively radiated from the power semiconductor. Thus, the exhaust heat of the power semiconductor is transmitted to the first and second cooling units through the radiator plate made of aluminum in this embodiment. The exhaust heat transmitted to the first and second cooling units from the power semiconductor is then recovered by the hot water flowing in the cooler 4, as described later. Thereby, the temperature of the power semiconductor provided in the inverter 3a is properly controlled.

The temperature detector 14a has a temperature sensor such as a thermistor for outputting temperature changes as voltage variations and is arranged so as to be able to detect the temperature of the inverter 3a. For example, the temperature detector 14a is placed at a specified position in the vicinity of the inverter 3a of the electric power converter 3 such that its temperature sensor directly detects the temperature of the inverter 3a. As the temperature sensor provided in the temperature detector 14a, any thermistors selected from NTC thermistors, PTC thermistors and CTR thermistors may be used. The temperature sensor is not limited to the thermistors and any types of temperature sensors may be employed as long as they can detect the temperature of the inverter 3a. The temperature sensor of the temperature detector 14 may be disposed within the electric power converter 3 to indirectly detect the temperature of the inverter 3a.
In this cogeneration system 100, the DC electric power output from the power generator 1 is supplied to the electric power converter 3 through a wire 11. This supplied DC electric power is converted into AC electric power by the inverter 3a of the electric power converter 3 and then supplied from the electric power converter 3 to the load.

Although the electric power converter 3 has the inverter 3a in this embodiment, the invention is not limited to such a configuration. For example, the electric power converter 3 may include a converter (AC-AC, DC-DC) and a rectifier (AC-DC), depending on the combination of the type of the power generator 1 (DC electric power generator or AC electric power generator) and the type of the power consumed by the load (DC load or AC load). In this specification, the constituent element that outputs DC electric power or AC electric power by power generation is referred to as "power generator", whereas the inverter 3a, converter and rectifier are referred to as "electric power converter".

The cogeneration system 100 has a hot water storage tank 6 for storing water supplied from an infrastructure (e.g., city water) as hot water; the annular hot water circulation path 2a in which the hot water stored in the hot water storage tank 6 is circulated so as to recover the exhaust heat of the cooler 4 and to exchange, at the heat exchanger 5, heat with the cooling water circulating in the cooling water circulation path 9; and a hot water pump 2b for circulating the hot water in the hot water circulation path 2a. In the first embodiment, the hot water circulation path 2a and the hot water pump 2b constitute a heat medium path 2 that serves as an exhaust heat recovery means.

In the cogeneration system 100 of the first embodiment, the exhaust heat recovery means, which is composed of the cooling water circulation path 9 for recovering the exhaust heat entailed by the power generation of the power generator 1 and the cooling water pump 10 for circulating the cooling water in the cooling water circulation path 9, is connected to the heat medium path 2 composed of the hot water circulation path 2a and the hot water pump 2b through the heat exchanger 5 so as to enable heat transmission. In such a configuration, the hot water stored in the hot water storage tank 6 recovers exhaust heat from the inverter 3a and exhaust heat from the power generator 1. The hot water, which has recovered exhaust heat from the inverter 3a and from the power generator 1, is again stored in the hot water storage tank 6. The hot water, which has risen in temperature after recovering exhaust heat, is discharged from the hot water storage tank 6 and properly utilized in applications such as hot water supply.

As illustrated in Fig. 1, the cogeneration system 100 has a controller 12. The controller 12 includes a main constituent element such as a CPU and memory and various electric and electronic parts for driving the main constituent element. The controller 12 properly controls the operation of the cogeneration system 100 by outputting control signals associated therewith. A program (e.g., a control program for executing the operation that characterizes the invention) associated with the operation of the cogeneration system 100 is prestored in the memory of the controller 12. Although not shown in Fig. 1, the controller 12, the electric power converter 3, the temperature detector 14a, the hot water pump 2b, the cooling water pump 10 and a route switch 7 (described later) etc. are electrically connected by wire. The operations of the electric power converter 3, the hot water pump 2b, the cooling water pump 10 and the route switch 7 are properly controlled by the controller 12.

Characteristically, the cogeneration system 100 of this embodiment is provided with the route switch 7 and a bypass path 8, as shown in Fig. 1.

Herein, the route switch 7 is a three-way valve that is remote-controllable by the controller 12. The route switch 7 has a first connection port 7a connected to one end of a first portion of the hot water circulation path 2a extending from the hot water pump 2b. The route switch 7 has a second connection port 7b from which a second portion of the hot water circulation path 2a extends, being connected, at one end thereof, to the cooler 4. Specifically, in this cogeneration system 100, the hot water discharged from the hot water storage tank 6 by the action of the hot water pump 2b passes through the first portion of the hot water circulation path 2a, the route switch 7 and the second portion of the hot water circulation path 2a in this order and is then supplied to the cooler 4. An on-off valve may be used as the route switch 7.

As shown in Fig. 1, one end of the bypass path 8 is connected to a third connection port 7c of the route switch 7. The other end of the bypass path 8 is connected to a specified position of the hot water circulation path 2a that connects the cooler 4 to the heat exchanger 5. Specifically, the bypass path 8 provided in this cogeneration system 100 is for diverting the hot water which has been introduced from the hot water storage tank 6 to the hot water circulation path 2a, such that the hot water does not flow into the cooler 4 and therefore is unable to recover the exhaust heat of the inverter 3a (cooler 4). The hot water, which has been supplied from the third connection port 7c of the route switch 7 to the bypass path 8, is sent to the heat exchanger 5 without recovering the exhaust heat of the inverter 3a (cooler 4). Herein, the route switch 7 is disposed so as to function to switch the destination of the hot water between the bypass path 8 and the hot water circulation path 2a.

Next, the operation of the cogeneration system according to the first embodiment of the invention will be described in detail.

In the rated operation of the cogeneration system 100, the exhaust heat of the power generator 1 is sequentially recovered by the cooling water circulated in the cooling water circulation path 9 by the cooling water pump 10. The exhaust heat of the power generator 1 recovered by the cooling water is transmitted to the heat medium path 2 by the heat exchange function of the heat exchanger 5.

After receipt of DC electric power supplied from the power generator 1 through the wire 11, the electric power converter 3 converts it into AC electric power by means of the inverter 3a. In the power conversion from DC electric power into AC electric power, the exhaust heat of the power semiconductor provided in the inverter 3a is transmitted to the cooler 4 through the radiator plate mounted thereon. Herein, in the heat medium path 2, the exhaust heat from the cooler 4 is sequentially recovered by the hot water that flows from the hot water storage tank 6 into the hot water circulation path 2a to be circulated therein by the hot water pump 2b. The hot water, which has risen in temperature after recovering the exhaust heat of the cooler 4, further increases in temperature through the recovery of the exhaust heat from the power generator 1 at the heat exchanger 5 and is then fed to the hot water storage tank 6. It should be noted that the hot water (warm water) stored in the hot water storage tank 6 is supplied for use in applications such as hot water supply according to need. The electric power converter 3 feeds the AC electric power, which has been generated through the power conversion of the inverter 3a, to the load.

In the shut-down operation of the cogeneration system 100 subsequent to completion of the power operation of the cogeneration system 100, the electric power converter 3 generally stops the power conversion from DC electric power to AC electric power so that the heat generation by the power semiconductor etc. provided in the inverter 3a immediately stops. Therefore, the transmission of the exhaust heat from the power semiconductor provided in the inverter 3a to the cooler 4 through the radiator plate also stops immediately.

Before the cogeneration system 100 starts the power generating operation, that is, in the start-up operation of the cogeneration system 100, the power generating operation of the power generator 1 is not usually executed and therefore the power conversion from DC electric power to AC electric power by the electric power converter 3 is usually stopped. Therefore, the power semiconductor provided in the inverter 3a does not generate heat. Accordingly, no exhaust heat is transmitted at all from the power semiconductor provided in the inverter 3a to the cooler 4 through the radiator plate.

That is, in the start-up or shut-down of the power generator 1, the radiator plate mounted on the power semiconductor and the cooler 4 function as a heat radiator for simply disposing heat energy.

In such a case, while the hot water storage tank 6 is in a filled-up state where the hot water is supplied from the hot water storage tank 6 to the cooler 4 in its low temperature condition by the hot water pump 2b, the temperature of the hot water supplied to the cooler 4 drops owing to the heat radiation function of the cooler in the low temperature condition and the radiator plate mounted on the power semiconductor. More concretely, if the hot water risen in temperature is supplied from the hot water storage tank 6 to the cooler 4 while the heat generation of the power semiconductor etc. provided in the inverter 3a of the electric power converter 3 is stopped subsequently to a stop in the power generation of the power generator 1 after completion of the operation of the cogeneration system 100, the hot water will be cooled by the cooler 4 in its low temperature condition. That is, the heat energy possessed by the hot water in a high temperature condition is discharged to the atmosphere from the cogeneration system 100. The discharge of the heat energy to the atmosphere causes a decrease in the energy utilization efficiency of the cogeneration system 100.

The cogeneration system 100 of this embodiment overcomes this situation with the controller 12 that controls the route switch 7 so as to change the destination of the hot water discharged from the hot water storage tank 6 from the cooler 4 to the bypass path 8 (i.e., the heat exchanger 5) in the start-up or shut-down of the cogeneration system 100 (power generator 1). Herein, a load power detector 15 detects the power consumption of the load that is supplied with AC electric power from the cogeneration system 100 and if the detected power consumption of the load is equal to or higher than a predetermined start-up power threshold value, the cogeneration system 100 starts the start-up operation. If the detected power consumption of the load is lower than a predetermined shut-down power threshold value, the cogeneration system 100 starts the shut-down operation.

For example, in the cogeneration system 100 of this embodiment, the controller 12 controls the route switch 7 such that the destination of the hot water discharged from the hot water storage tank 6 is changed from the cooler 4 to the bypass path 8 if the circulation of the hot water is caused by the operation of the hot water pump 2b in the shut-down operation of the power generator 1. Thereby, the hot water discharged from the hot water storage tank 6 is supplied to the heat exchanger 5 by way of the route switch 7 and the bypass path 8 without being supplied to the cooler 4. By doing so, the temperature of the power generator 1 does not instantly drop to ambient temperature but gradually drops with time in the shut-down operation of the power generator 1. Therefore, the hot water supplied to the heat exchanger 5 recovers the exhaust heat (waste heat) of the power generator 1 at the heat exchanger 5 and then returns to the hot water storage tank 6. In the period of time when the hot water can recover the exhaust heat of the power generator 1, the controller 12 keeps the route switch 7 in the control condition in which the destination of the hot water discharged from the hot water storage tank 6 is the bypass path 8. After detecting that the temperature of the power generator 1 has dropped to ambient temperature and the hot water cannot recover the exhaust heat of the power generator 1, the controller 12 stops the operation of the hot water pump 2b.

In the cogeneration system 100 of the first embodiment, if the amount of DC electric power supplied to the electric power converter 3 decreases with a drop in the output electric power of the power generator 1, the amount of power conversion from DC electric power to AC electric power will decrease accompanied with a drop in the amount of heat generated by the power semiconductor etc. of the inverter 3a, even when the cogeneration system 100 performs the power generating operation. In this case, the amount of exhaust heat transmitted from the power semiconductor of the inverter 3a to the cooler 4 through the radiator plate decreases. That is, even when the controller 12 controls the operation of the cogeneration system 100 so as to reduce the output electric power of the power generator 1 as the power consumption of the load drops, the radiator plate mounted on the power semiconductor and the cooler 4 sometimes function as a heat radiator for simply disposing heat energy.

Therefore, the cogeneration system 100 of the first embodiment is configured such that even when the power generator 1 performs the power generating operation other than the start-up operation and shut-down operation, the controller 12 controls the route switch 7 so as to switch the destination of the hot water discharged from the hot water storage tank 6 from the cooler 4 to the bypass path 8, if the temperature (physical quantity proportional to the amount of exhaust heat) of the inverter 3a detected by the temperature detector 14a that serves as the exhaust heat amount detector is lower than a predetermined temperature threshold value. Thereby, the hot water discharged from the hot water storage tank 6 is supplied to the heat exchanger 5 by way of the route switch 7 and the bypass path 8 without being supplied to the cooler 4. Accordingly, the heat recovery efficiency of the hot water increases which leads to an improvement in the energy saving performance of the cogeneration system, compared to the case where the hot water is allowed to pass through the cooler 4 in the low load operation of the power generator 1. It should be noted that the above temperature threshold value is defined as a temperature at which the hot water is supposed to be able to recover heat (i.e., supposed not to liberate heat) in the cooler 4.
In this case, if the power consumption of the load increases so that the temperature of the inverter 3a detected by the temperature detector 14a becomes equal to or higher than the predetermined temperature threshold value, the controller 12 will control the route switch 7 so as to switch the destination of the hot water discharged from the hot water storage tank 6 from the bypass path 8 to the cooler 4. Thereby, the hot water discharged from the hot water storage tank 6 is supplied to the cooler 4 by way of the route switch 7 and a part of the heat medium path 2 and is then supplied to the heat exchanger 5. Therefore, the hot water supplied to the heat exchanger 5 recovers the exhaust heat of the power generator 1 at the heat exchanger 5 and then returns to the hot water storage tank 6. Since the emission of heat from the electric power converter 3 is thus promoted by the high load operation of the power generator 1 and the exhaust heat is recovered by the hot water when exhaust heat recovery by the cooler 4 is possible, the heat recovery efficiency of the hot water increases which leads to an improvement in the energy saving performance of the cogeneration system.
According to the configuration of the cogeneration system 100 of the first embodiment described hereinabove, the route switch 7 is controlled so as to switch the destination of the hot water from the cooler 4 to the bypass path 8 in accordance with the operating condition of the inverter 3a, so that the hot water can be prevented from being cooled by the cooler 4. This brings about an improvement in the energy saving performance of the cogeneration system 100. As a result, the convenience of the cogeneration system 100 can be further enhanced.

According to the characteristic configuration of the cogeneration system 100, in the start-up operation and shut-down operation of the power generator 1, the power conversion loss of the electric power converter 3 decreases and therefore the route switch 7 is controlled so as to switch the destination of the hot water from the cooler 4 to the bypass path 8. This leads to a further improvement in the power saving performance of the cogeneration system 100.

According to the characteristic configuration of the cogeneration system 100, the cooling water circulation path 9 through which the cooling water for cooling the power generator 1 flows is separated from the hot water circulation path 2a through which the hot water flows, the hot water receiving heat at the cooler 4 mounted on the inverter 3a of the electric power converter 3 and at the heat exchanger 5. This prevents the cooling water from getting mixed up with the hot water so that the energy saving performance of the cogeneration system 100 can be further improved.

While the first embodiment has been discussed with a case where the temperature of the inverter 3a is detected and the route switch 7 is controlled if the detected temperature is lower than a predetermined temperature threshold value, the invention is not necessarily limited to this. The invention is equally applicable, for example, to a cogeneration system configured to properly perform operations in accordance with a specified control program, in which the route switch 7 is properly controlled according to this control program. It is apparent that the same effect as of the first embodiment can be achieved by this alternative system.
Although the first embodiment has been presented in terms of a case where the temperature detector 14a detects the temperature of the electric power converter 3, the invention is not necessarily limited to this. An alternative configuration is such that the temperature detector 14a is provided downstream of the cooler 4 to thereby detect the temperature of the hot water passing through the cooler 4. It is apparent that the same effect as of the first embodiment can be achieved by this alternative configuration.

### (Second Embodiment)

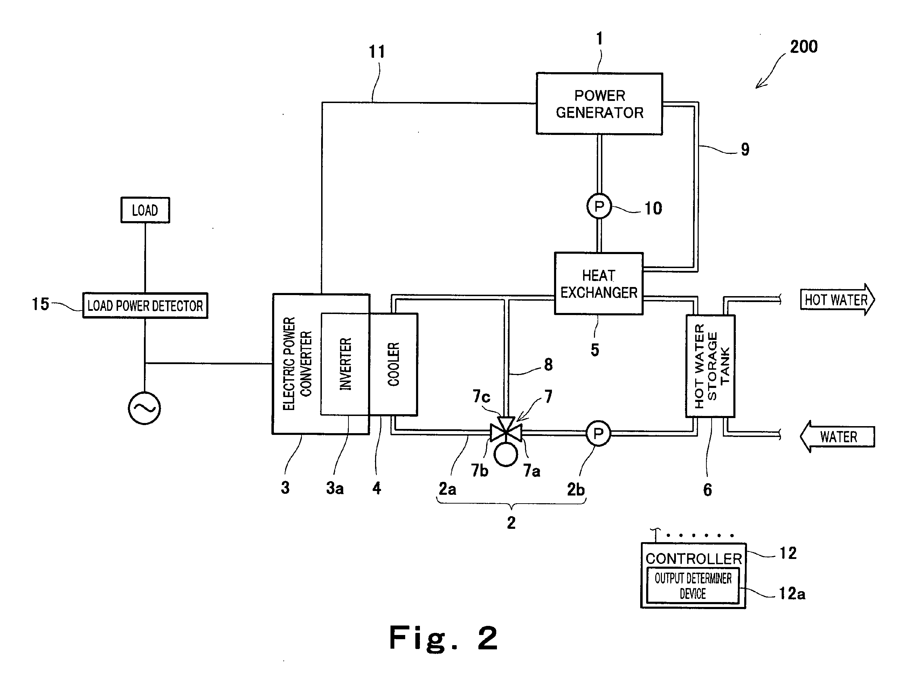

Fig. 2 is a block diagram that schematically shows a configuration of a fuel cell system according to a second embodiment of the invention.

As shown in Fig. 2, a cogeneration system 200 constructed according to the second embodiment of the invention has the same configuration as of the cogeneration system 100 shown in Fig. 1 except that the controller 12 of the system 200 has an output determiner device 12a. Therefore, a further explanation of the configuration identical to that of the cogeneration system 100 is omitted in the following description.

The output determiner device 12a provided in the controller 12 outputs a specified control signal (output command signal) for controlling the operation of the electric power converter 3 and the amount of power generated by the power generator 1 in order to determine the output value of AC electric power from the electric power converter 3. This specified control signal and the output value of AC electric power from the electric power converter 3 are interrelated under a specified correlation. After the specified control signal has been issued from the output determiner device 12a to the electric power converter 3 etc., the electric power converter 3 for example is controlled so as to output AC electric power the output value of which corresponds to the specified control signal that has been issued. More concretely, upon detection of a drop in the power consumption of the load by the load power detector 15, the output determiner device 12a of the controller 12 outputs a control signal according to the drop in the power consumption, thereby reducing the AC electric power output value of the electric power converter 3. On the other hand, if an increase in the power consumption of the load is detected by the load power detector 15, the output determiner device 12a of the controller 12 outputs a control signal according to the increase in the power consumption, thereby increasing the AC electric power output value of the electric power converter 3.

In the low load operation of the cogeneration system 100 when the amount of power generated by the system 100 drops, the power conversion loss of the electric power converter 3 decreases according to the drop in the amount of generated power, which in turn causes a drop in the amount of heat generated by the power semiconductor provided in the inverter 3a. Therefore, the amount of exhaust heat transmitted from the power semiconductor of the inverter 3a to the cooler 4 through the radiator plate also decreases. In this case, the radiator plate mounted on the power semiconductor and the cooler 4 function simply as a heat radiator, similarly to the first embodiment.

The cogeneration system 200 of the second embodiment overcomes this situation with the controller 12 that controls the route switch 7 so as to change the destination of the hot water from the cooler 4 to the bypass path 8 if the output electric power value determined by the output determiner device 12a that serves as the exhaust heat amount detector is lower than a predetermined power threshold value. Thereby, the hot water discharged from the hot water storage tank 6 is supplied to the heat exchanger 5 by way of the route switch 7 and the bypass path 8 without being supplied to the cooler 4. Accordingly, the heat recovery efficiency of the hot water increases accompanied with an improvement in the energy saving performance of the cogeneration system, compared to the case where the hot water is allowed pass through the cooler 4 in the low load operation of the power generator 1. It should be noted that the above power threshold value is defined as an output electric power value with which the hot water is supposed to be able to recover heat (i.e., supposed not to liberate heat) in the cooler 4.

In the cogeneration system 200 of the second embodiment, the controller 12 controls the route switch 7 so as to switch the destination of the hot water from the bypass path 8 to the cooler 4 side if the output electric power value determined by the output determiner device 12a is equal to or larger than a predetermined power threshold value. Thereby, the hot water discharged from the hot water storage tank 6 is supplied to the cooler 4 after passing through the route switch 7 and a part of the heat medium path 2 and is then supplied to the heat exchanger 5. Thereafter, the hot water supplied to the heat exchanger 5 recovers the exhaust heat of the power generator 1 at the heat exchanger 5 and then returns to the hot water storage tank 6. Since the emission of heat from the electric power converter 3 is thus promoted by the high load operation of the power generator 1 and the exhaust heat is recovered by the hot water when exhaust heat recovery by the cooler 4 is possible, the heat recovery efficiency of the hot water increases which leads to an improvement in the energy saving performance of the cogeneration system.

In the second embodiment, the output determiner device 12a serves as one example of the exhaust heat amount detector. Specifically, the output determiner device 12a determines the output electric power value by utilizing the power consumption of the load detected by the load power detector 15 as described earlier, and the power consumption of the load is usually proportional to the output electric power value determined by the output determiner device 12a. Therefore, the load power detector 15 may be used as the exhaust heat amount detector in place of the output determiner device 12a. In this case, if the power consumption of the load detected by the load power detector 15 is smaller than a predetermined power consumption threshold value, the route switch 7 is controlled so as to switch the destination of the hot water from the cooler 4 to the bypass path 8 and if the power consumption of the load detected by the load power detector 15 is equal to or greater than the power consumption threshold value, the route switch 7 is controlled so as to switch the destination of the hot water from the bypass path 8 to the cooler 4. It should be noted the above power consumption threshold value is defined as a power consumption value with which the hot water is supposed to be able to recover heat (i.e., supposed not to liberate heat) in the cooler 4.

### (Third Embodiment)

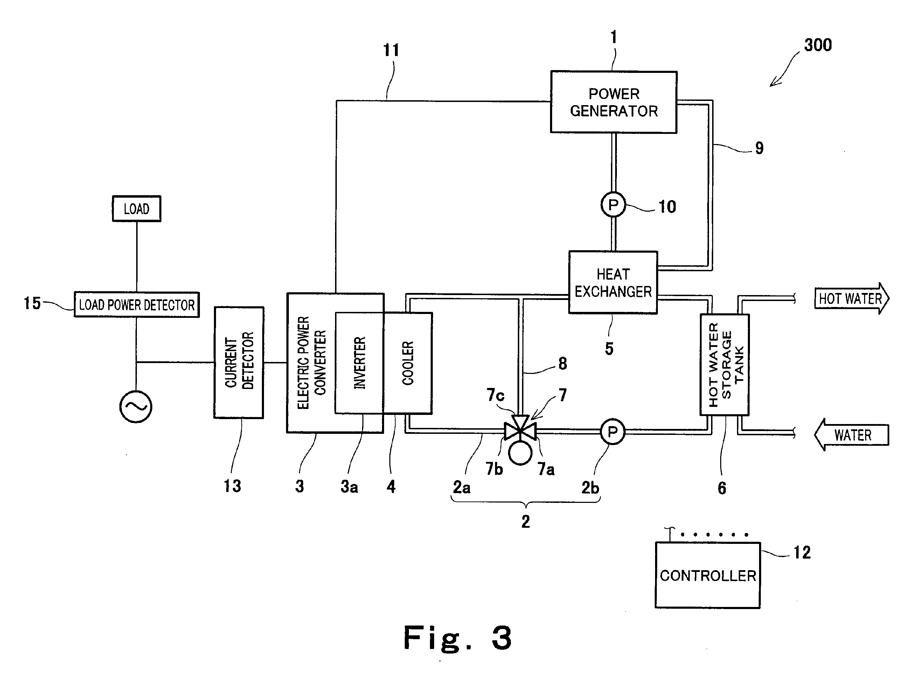

Fig. 3 is a block diagram that schematically shows a configuration of a fuel cell system according to a third embodiment.

As shown in Fig. 3, a cogeneration system 300 constructed according to the third embodiment of the invention has the same configuration as of the cogeneration system 100 shown in Fig. 1 except the system 300 is further provided with a current detector 13. Therefore, a further explanation of the configuration identical to that of the cogeneration system 100 is omitted in the following description.

The current detector 13 detects the output current value of the electric power converter 3 in the power generating operation of the cogeneration system 300. The current detector 13 is properly arranged in the vicinity of the wire that electrically connects the electric power converter 3 to the load or arranged so as to allow the wire to penetrate through the current detector 13. Herein, examples of the current detector 13 include current sensors such as open loop sensors, closed loop sensors, magnetic coil sensors, and coreless coil sensors. When AC electric power is supplied from the electric power converter 3 to the load, the current detector 13 outputs DC voltage into which the AC current flowing in the wire for electrically connecting the electric power converter 3 and the load is converted and which is proportional to the AC current. It should be noted a current sensor serving as the current detector 13 is properly selected according to the frequency of the AC electric power released from the electric power converter 3 in order to accurately detect the output current value of the AC electric power. As the current sensor, an ampere meter that uses shunt resistances may be used. In this case, the ampere meter measures the voltage difference between shunt resistances connected in series between the electric power converter 3 and the load and outputs the measured voltage difference.

In the third embodiment as well, in the low load operation when the amount of power generated by the cogeneration system 300 drops, the power conversion loss of the electric power converter 3 decreases according to the drop in the amount of generated power and the amount of heat generated by the power semiconductor provided in the inverter 3a also decreases. Therefore, the amount of exhaust heat transmitted from the power semiconductor etc. of the inverter 3a to the cooler 4 through the radiator plate also decreases. Therefore, the radiator plate mounted on the power semiconductor and the cooler 4 simply function as a heat radiator.

The cogeneration system 300 of the third embodiment overcomes this situation with the controller 12 that controls the route switch 7 so as to switch the destination of the hot water from the cooler 4 to the bypass path 8 if the output current value detected by the current detector 13 that serves as the exhaust heat amount detector is smaller than a predetermined current threshold value. Thereby, the hot water introduced from the hot water storage tank 6 into the hot water circulation path 2a is not supplied to the cooler 4 but supplied to the heat exchanger 5 by way of the route switch 7 and the bypass path 8, similarly to the first and second embodiments. Accordingly, the heat recovery efficiency of the hot water increases accompanied with an improvement in the energy saving performance of the cogeneration system, compared to the case where the hot water is allowed to pass through the cooler 4 in the low load operation of the power generator 1. It should be noted that the above current threshold value is defined as an output current value with which the hot water is supposed to be able to recover heat (i.e., supposed not to liberate heat) in the cooler 4.

In the cogeneration system 300 of the third embodiment, the controller 12 controls the route switch 7 so as to switch the destination of the hot water from the bypass path 8 to the cooler 4 if the output current value detected by the current detector 13 is equal to or greater than a predetermined current threshold value. Thereby, the hot water discharged from the hot water storage tank 6 is supplied to the cooler 4 by way of the route switch 7 and a part of the heat medium path 2 and is then supplied to the heat exchanger 5. Thereafter, the hot water supplied to the heat exchanger 5 recovers the exhaust heat of the power generator 1 at the heat exchanger 5 and then returns to the hot water storage tank 6. Since the emission of heat from the electric power converter 3 is thus promoted by the high load operation of the power generator 1 and the exhaust heat is recovered by the hot water when exhaust heat recovery by the cooler 4 is possible, the heat recovery efficiency of the hot water increases, which leads to an improvement in the energy saving performance of the cogeneration system.

Although the third embodiment has been discussed with a case where the output current value of the electric power converter 3 is detected by the current detector 13, it is apparent that the invention is not necessarily limited to this. The invention is equally applicable, for instance, to a configuration in which the current detector 13 is disposed on the wire 11 that connects the power generator 1 and the electric power converter 3 and the output current value of the power generator 1 (i.e., the current value to be input to the electric power converter 3) is detected by the current detector 13. It is apparent that the same effect as of the third embodiment can be achieved by this alternative configuration.

### (Fourth Embodiment)

First, a configuration of a cogeneration system according to a fourth embodiment of the invention will be described in detail.

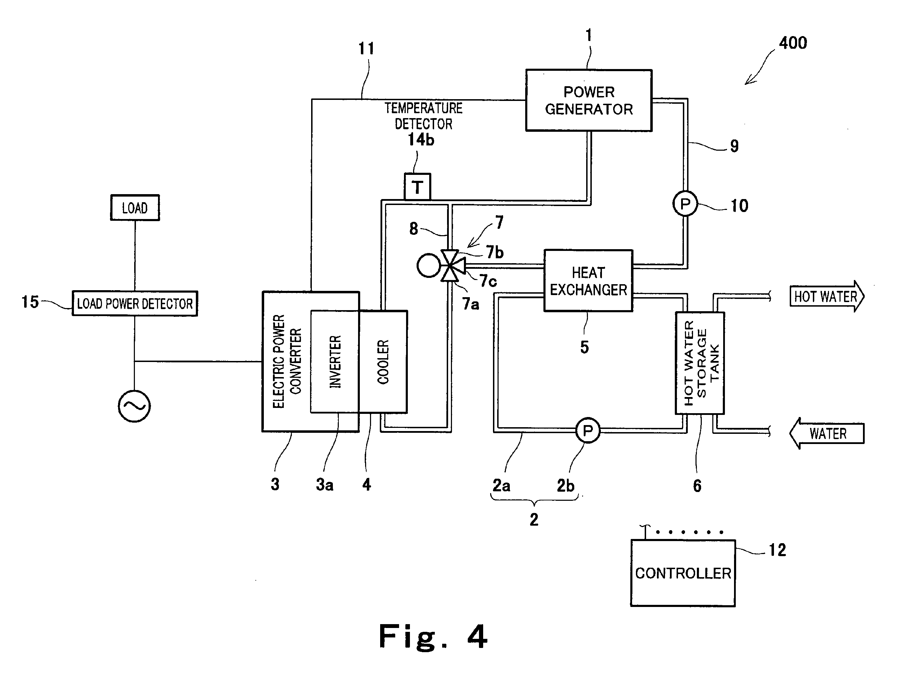

Fig. 4 is a block diagram schematically showing a configuration of a cogeneration system according to the fourth embodiment of the invention. It should be noted that Fig. 4 illustrates the constituent elements necessary for description of the invention while omitting illustration of other constituent elements.

As shown in Fig. 4, a cogeneration system 400 constructed according to the fourth embodiment of the invention has the power generator 1 for outputting DC electric power; the annular cooling water circulation path 9 in which cooling water used for recovering the exhaust heat of the power generator 1 is circulated; the cooling water pump 10 for circulating the cooling water in the cooling water circulation path 9; and the heat exchanger 5 for effecting heat exchange between the cooling water circulated in the cooling water circulation path 9 by the cooling water pump 10 and hot water circulated in the hot water circulation path 2a. As shown in Fig. 4, in the cogeneration system 400, the cooling water circulation path 9 is formed so as to pass through the cooler 4. That is, in the cogeneration system 400, the configurations shown in the first to third embodiments in which the exhaust heat of the cooler 4 is recovered by the hot water are replaced by the configuration in which the exhaust heat of the cooler 4 is recovered by the cooling water used for cooling the power generator 1.

As shown in Fig. 4, the cogeneration system 400 of the fourth embodiment has a temperature detector 14b in addition to the route switch 7 and the bypass path 8.

Herein, the route switch 7 is a three-way valve remote-controllable by the controller 12. The route switch 7 has the third connection port 7c connected to one end of a first portion of the cooling water circulation path 9 extending from the heat exchanger 5. One end of a second portion of the cooling water circulation path 9 extending from the first connection port 7a of the route switch 7 is connected to the cooler 4. Specifically, in the cogeneration system 400 of the fourth embodiment, the cooling water discharged from the power generator 1 by the cooling water pump 10 passes through the first portion of the cooling water circulation path 9, the heat exchanger 5, the route switch 7, and the second portion of the cooling water circulation path 9 in this order and is then supplied to the cooler 4. The cooling water discharged from the cooler 4 is supplied to the power generator 1 by way of a third portion of the cooling water circulation path 9.

As shown in Fig. 4, the bypass path 8 is connected, at one end thereof, to the second connection port 7b of the route switch 7. The other end of the bypass path 8 is connected to a specified position in the cooling water circulation path 9 that connects the cooler 4 and the power generator 1. Specifically, in the cogeneration system 400, the bypass path 8 is for diverting the cooling water flowing in the cooling water circulation path 9 such that the cooling water is disallowed to recover the exhaust heat of the inverter 3a. The bypass path 8 sends the cooling water, which has been supplied from the second connection port 7b of the route switch 7 to the bypass path 8, to the power generator 1 without recovering the exhaust heat of the inverter 3a. Herein, the route switch 7 is arranged so as to function to switch the destination of the cooling water between the bypass path 8 and the cooling water circulation path 9.

The temperature detector 14b has a temperature sensor such as a thermistor for outputting temperature variations as voltage variations and is arranged so as to detect the temperature of the cooling water discharged from the cooler 4. For instance, the temperature detector 14b is placed at a specified position of a portion of the cooling water circulation path 9 that connects the cooler 4 and the power generator 1, the specified position being located on the cooler 4 side. The temperature detector 14b indirectly detects the temperature of the cooling water by detecting the temperature of the cooling water circulation path 9 with its temperature sensor. As the temperature sensor provided in the temperature detector 14b, any thermistors selected from NTC thermistors, PTC thermistors and CTR thermistors may be used like the first embodiment. The temperature sensor is not limited to the thermistors and any types of temperature sensors may be employed as long as they can detect the temperature of the cooling water discharged from the cooler 4. In addition, the temperature sensor provided for the temperature detector 14b may be disposed within the cooling water circulation path 9 to directly detect the temperature of the cooling water discharged from the cooler 4.

As shown in Fig. 4, the cogeneration system 400 has the hot water storage tank 6 for storing water supplied from an infrastructure (e.g., city water) as hot water; the annular hot water circulation path 2a in which the hot water stored in the hot water storage tank 6 is circulated so as to exchange, at the heat exchanger 5, heat with the cooling water circulated in the cooling water circulation path 9; and a hot water pump 2b for circulating the hot water in the hot water circulation path 2a.

The fourth embodiment does not differ from the first to third embodiments except the above-described construction of the electric power converter 3, the cooler 4, the controller 12 and others.

In the cogeneration system 400 of the fourth embodiment, the heat medium path, which is constituted by the cooling water circulation path 9 utilized for recovering exhaust heat entailed by the power generation of the power generator 1 and exhaust heat from the inverter 3a and a cooling water pump 10 for circulating the cooling water in the cooling water circulation path 9, is connected to the exhaust recovery means composed of the hot water circulation path 2a and the hot water pump 2b by means of the heat exchanger 5 in such a condition that heat can be transmitted therebetween. In such a configuration, the hot water introduced from the hot water storage tank 6 into the hot water circulation path 2a by the action of the hot water pump 2b recovers exhaust heat from the inverter 3a and from the power generator 1. The hot water, which has recovered exhaust heat from the inverter 3a and from the power generator 1, is again stored in the hot water storage tank 6 and properly utilized in applications such as hot water supply.

Next, the operation of the cogeneration system according to the fourth embodiment of the invention will be described in detail.

After receiving DC electric power from the power generator 1 through the wire 11 in the rated power generating operation of the cogeneration system 400, the electric power converter 3 converts the supplied DC electric power into AC electric power by means of the inverter 3a. The electric power converter 3 supplies the AC electric power generated by the power conversion of the inverter 3a to the load. In the power conversion from DC electric power into AC electric power, the exhaust heat of the power semiconductor provided in the inverter 3a is transmitted to the cooler 4 through the radiator plate mounted thereon.

In the rated power generating operation of the cogeneration system 400, the exhaust heat of the power generator 1 is successively recovered by the cooling water that is circulated in the cooling water circulation path 9 by the cooling water pump 10. As mentioned earlier, the exhaust heat of the power semiconductor provided in the inverter 3a is transmitted to the cooler 4 through the radiator plate mounted thereon. Then, the exhaust heat of the cooler 4 is successively recovered by the cooling water circulated in the cooling water circulation path 9 by the cooling water pump 10. The exhaust heat of the power generator 1 and the exhaust heat of the cooler 4, which have been recovered by the cooling water, are transmitted to the hot water circulated in the hot water circulation path 2a, owing to the heat exchange function of the heat exchanger 5.

The hot water, which has recovered the exhaust heat of the power generator 1 and the exhaust heat of the cooler 4 in the heat exchanger 5, is then supplied to the hot water storage tank 6. It should be noted that the hot water stored in the hot water storage tank 6 is supplied for use in applications such as hot water supply according to need.

In this embodiment as well, in the low load operation when the amount of power generated by the cogeneration system 400 drops, the power conversion loss of the electric power converter 3 decreases according to the drop in the amount of generated power, which in turn causes a drop in the amount of heat generated by the power semiconductor provided in the inverter 3a. Therefore, the amount of exhaust heat transmitted from the power semiconductor of the inverter 3a to the cooler 4 through the radiator plate also decreases. Therefore, the radiator plate mounted on the power semiconductor and the cooler 4 simply function as a heat radiator. In this case, if the cooling water flows into the cooler 4, heat radiation occurs through the cooler 4 and the radiator plate provided in the inverter 3a, so that the temperature of the cooling water decreases because of the heat radiation and, in consequence, the heat recovery efficiency of the hot water, which recovers heat through the heat exchanger 5, drops.

The cogeneration system 400 of the fourth embodiment overcomes this situation with the controller 12 that controls the route switch 7 in the power generating operation so as to switch the destination of the hot water from the cooler 4 to the bypass path 8 if the temperature of the cooling water discharged from the cooler 4, which has been detected by the temperature detector 14b serving as the exhaust heat amount detector, is smaller than a predetermined temperature threshold value. Thereby, the cooling water discharged from the heat exchanger 5 is not supplied to the cooler 4 but supplied to the power generator 1 by way of the route switch 7 and the bypass path 8. Accordingly, the heat recovery efficiency of the hot water increases accompanied with an improvement in the energy saving performance of the cogeneration system, compared to the case where the cooling water is allowed to pass through the cooler 4 in the low load operation of the power generator 1. It should be noted that the above temperature threshold value is defined as a temperature at which the cooling water is supposed to be able to recover heat (i.e., supposed not to liberate heat) in the cooler 4.

In the cogeneration system 400 of this embodiment, the controller 12 controls the route switch 7 in the power generating operation so as to switch the destination of the cooling water from the bypass path 8 to the cooler 4 if the temperature of the cooling water discharged from the cooler 4, which has been detected by the temperature detector 14b, is equal to or greater than the predetermined temperature threshold value. Thereby, the cooling water discharged from the heat exchanger 5 is supplied to the cooler 4 by way of the route switch 7 and a portion of the cooling water circulation path 9 and returns to the heat exchanger 5 after being supplied to the power generator 1. Since the emission of heat from the electric power converter 3 is thus promoted by the high load operation of the power generator 1 and the exhaust heat is recovered by the cooling water when exhaust heat recovery by the cooler 4 is possible, the heat recovery efficiency of the hot water increases, resulting in an improvement in the energy saving performance of the cogeneration system.

In the fourth embodiment, it is preferable in view of the temperature controllability of the power generator 1 to arrange the cooler 4 at a position downstream of the power generator 1 and upstream of the heat exchanger 5 with respect to the flowing direction of the cooling water. The reason for this is that this arrangement makes it possible to easily control the temperature of the cooling water flowing into the power generator 1. However, the arrangement of the cooler 4 at a position downstream of the power generator 1 may cause the problem that the temperature of the cooling water flowing into the cooler 4 rises, leading not only to a drop in the exhaust heat recovery efficiency in the cooler 4 but also to an insufficient reduction in the temperature of the electric power converter 3, which causes thermal runaway. Therefore, the cooler 4 is preferably located downstream of the heat exchanger 5 and upstream of the power generator 1 with respect to the flowing direction of the cooling water, as shown in Fig. 4.

Although the fourth embodiment has been discussed with a case where the route switch 7 is controlled in accordance with the temperature (absolute value) of the cooling water discharged from the cooler 4 which temperature has been detected by the temperature detector 14b, it is apparent that the invention is not limited to this. The invention is equally applicable to, for instance, a system in which the temperature detector 14b is provided in front of and behind the cooler 4 (that is, two temperature detectors 14b are provided on the upstream side and downstream side, respectively, of the cooler 4 with respect to the flowing direction of the cooling water) and the route switch 7 is controlled based on the difference between the temperature of the cooling water flowing into the cooler 4 and the temperature of the cooling water discharged from the cooler 4. The same effect as of the fourth embodiment can be achieved by this alternative system configured, for example, such that if the temperature of the cooling water at the downstream side of the cooler 4 is higher than the temperature of the cooling water at the upstream side (i.e., the temperature at the downstream side of the cooler 4 - the temperature at the upstream side of the cooler 4 > 0), the route switch 7 is switched to the cooler 4 side, and if the temperature of the cooling water at the downstream side of the cooler 4 is equal to or lower than the temperature of the cooling water at the upstream side (i.e., the temperature at the downstream side of the cooler 4 - the temperature at the upstream side of the cooler 4 = 0), the route switch 7 is switched to the bypass path 8 side.

### (Fifth Embodiment)

The cogeneration system of the fifth embodiment of the invention has the same configuration as of the cogeneration system 400 shown in Fig. 4 except that the system of the fifth embodiment has a fuel cell as the power generator 1 which fuel cell outputs DC electric power through power generation that uses hydrogen contained in a fuel gas and oxygen contained in an oxidizing gas.

That is, the fifth embodiment is configured similarly to the fourth embodiment such that the bypass path 8 is provided on the cooling water circulation path 9 together with the heat exchanger 5, the route switch 7 and the cooler 4, the circulation path 9 being configured to cool the fuel cell that serves as the power generator 1. In addition, the temperature detector 14 including a temperature sensor such as a thermistor is provided at the cooling water outlet side of the cooler 4 in the cooling water circulation path 9, like the fourth embodiment. The exhaust heat of the fuel cell and the exhaust heat of the inverter 3a are successively recovered by the cooling water circulated in the cooling water circulation path 9 by the cooling water pump 10. The exhaust heat of the fuel cell and the exhaust heat of the inverter 3a, which have been recovered by the cooling water, are successively recovered by the hot water through the heat exchanger, the hot water being circulated in the hot water circulation path 2a by the hot water pump 2b. The hot water, which has recovered the exhaust heat of the fuel cell and the exhaust heat of the inverter 3a in the heat exchanger 5, is stored in the hot water storage tank 6 to be used in applications such as hot water supply according to need.

Although the fuel cell serving as the power generator 1 generates DC electric power herein, the generated DC electric power cannot be supplied to electric appliances etc. for household use. That is, the DC electric power generated by the fuel cell needs to be converted into AC electric power having commercial frequency in order to use it for electric appliances etc. for household use. Therefore, the cogeneration system of the fifth embodiment is provided with the electric power converter 3 having a built-in DC-DC converter circuit and a built-in DC-AC inverter circuit for converting the DC electric power of the fuel cell into AC electric power (50Hz/60Hz) that can be supplied to electric appliances etc. for household use.

The characteristic operation of the cogeneration system of the fifth embodiment will be described in detail. In the start-up operation of the cogeneration system 400, the operation of the electric power converter 3 is stopped and therefore no exhaust heat is generated from the electric power converter 3. If the cooling water is supplied to the cooler 4 in the start-up operation of the fuel cell, the temperature of the cooling water drops owing to the heat radiation through the cooler 4 and the radiator plate provided in the inverter 3a. Therefore, in the fifth embodiment, when the controller 12 puts the cooling pump 10 and the hot water pump 2b into operation at the time of the start-up operation to transmit heat from the hot water to the cooling water through the heat exchanger 5 thereby executing the heat-up operation of the fuel cell, the controller 12 controls the route switch 7 such that the cooling water circulated by the cooling water pump 10 is supplied to the fuel cell through the bypass path 8 without being fed to the cooler 4.

When the operation of the electric power converter 3 is stopped upon completion of the power generating operation of the fuel cell serving as the power generator 1, the amount of exhaust heat caused by the power conversion loss of the electric power converter 3 rapidly decreases. That is, in the electric power converter 3, since the operation of the power semiconductor that is a constituent element of the inverter 3a and the operation of its driving circuit etc. stop at the same time with a stop of power generation, the movement of exhaust heat from the radiator plate mounted on the power semiconductor to the cooler 4 stops. If the cooling water is fed to the cooler 4 at that time, the temperature of the cooling water drops because of the heat radiation through the cooler 4 and the radiator plate provided in the inverter 3a. The fifth embodiment overcomes this situation with the controller 12 that controls the route switch 7 so as to supply the cooling water circulated by the cooling water pump 10 to the fuel cell through the bypass path 8, when executing exhaust heat recovery operation by operating the cooling water pump 10 and the hot water pump 2b in the shut-down operation of the cogeneration system. In this case, the temperature of the fuel cell serving as the power generator 1 does not instantly drop to ambient temperature. Therefore, in the period in which the fuel cell serving as the power generator 1 produces residual heat etc., the residual heat etc. can be recovered. Accordingly, the residual heat etc. of the fuel cell is recovered by the cooling water flowing in the route switch 7 and the bypass path 8 and is finally recovered by the hot water through the heat exchanger 5.
In the cogeneration system 400 of the fifth embodiment, the controller 12 controls the route switch 7, in the course of the power generating operation, so as to switch the destination of the hot water from the cooler 4 to the bypass path 8 if the temperature of the cooling water discharged from the cooler 4, which has been detected by the temperature detector 14b serving as the exhaust heat amount detector, is smaller than a predetermined temperature threshold value. Thereby, the cooling water discharged from the heat exchanger 5 is supplied to the power generator 1 by way of the route switch 7 and the bypass path 8 without being supplied to the cooler 4. Accordingly, the heat recovery efficiency of the hot water increases accompanied with an improvement in the energy saving performance of the cogeneration system, compared to the case where the cooling water is allowed to pass through the cooler 4 in the low load operation of the cogeneration system 400. It should be noted that the above temperature threshold value is defined as a temperature at which the cooling water is supposed to be able to recover heat (i.e., supposed not to liberate heat) in the cooler 4.
In the cogeneration system 400 of the fifth embodiment, the controller 12 controls the route switch 7 so as to switch the destination of the cooling water from the bypass path 8 to the cooler 4 if the temperature of the cooling water discharged from the cooler 4, which has been detected by the temperature detector 14b, is equal to or greater than the predetermined temperature threshold value. Thereby, the cooling water discharged from the heat exchanger 5 is supplied to the cooler 4 by way of the route switch 7 and a portion of the cooling water circulation path 9 and returns to the heat exchanger 5 after being supplied to the power generator 1. Since the emission of heat from the electric power converter 3 is thus promoted by the high load operation of the cogeneration system 400 and the exhaust heat is recovered by the cooling water when exhaust heat recovery by the cooler 4 is possible, the heat recovery efficiency of the hot water increases, which leads to an improvement in the energy saving performance of the cogeneration system.

According to the configuration of the cogeneration system of the fifth embodiment, the route switch 7 is properly switched in accordance with the operational state of the electric power converter 3 to allow or disallow the supply of the cooling water to the bypass path 8. Therefore, the radiation of heat from the cooler 4 in the shutdown of the electric power converter 3 can be prevented. In consequence, improved energy saving performance can be achieved in cogeneration systems etc. for household use, which have a fuel cell as the power generator 1.

Although the fourth and fifth embodiments have been discussed with a case where the cooling water circulation path 9 is provided with the temperature detector 14 located at a specified position thereof, it is apparent that the invention is not necessarily limited to this. In an alternative configuration, the temperature detector 14 is attached to the cooler 4 and the controller 12 controls the route switch 7 based on the temperature of the cooler 4. The same effect as of the fourth and fifth embodiments can be achieved by the alternative configuration just described above.

### (Sixth Embodiment)

The first to fifth embodiments have been discussed on the assumption that the constituent elements of the cogeneration system 100 to 400 operate normally. More specifically, the first to fifth embodiments have been discussed in terms of configurations in which the route switch 7 is controlled so as to switch the destination of the hot water or cooling water from the cooler 4 to the bypass path 8 in the circulation of the cooling water and the hot water executed by the operation of the cooling water pump 10 and the hot water pump 2b while the cogeneration system 100 in normal operation being shut down, and configurations in which the route switch 7 is controlled so as to switch the destination of the hot water or cooling water from the cooler 4 to the bypass path 8 in accordance with the amount of exhaust heat of the inverter 3a while the electric power converter 3 is normally performing operation. However, these configurations have revealed the disadvantage that when abnormal shut-down is executed in the event of occurrence of some abnormalities, an improvement in the energy saving performance of the cogeneration system 100 cannot be expected in some cases by controlling the route switch 7 so as to perform the above-described circulation operation in the same way as in the normal shut-down operation executed when no abnormalities have occurred. This happens when an abnormal high temperature occurs in the inverter 3a. The sixth embodiment will be discussed in terms of a case where the above-described circulation operation is executed when abnormal shut-down occurs after the temperature of the inverter 3a becomes abnormally high in the cogeneration system 100.
There will be explained a characteristic operation performed in the case where an abnormality has occurred in the inverter 3a of the cogeneration system 100. The operation described below can be adopted in any of the first to fifth embodiments.

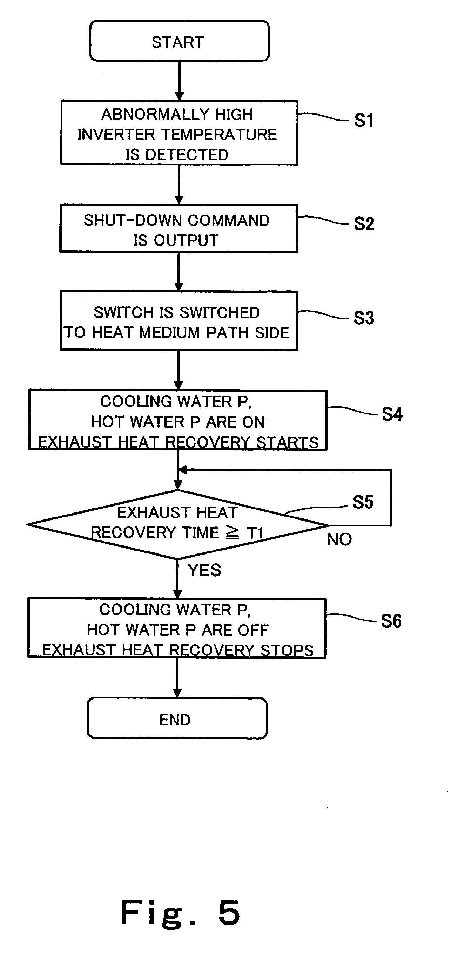

Fig. 5 is a flow chart schematically showing an operation of the cogeneration system according to the sixth embodiment of the invention. It should be noted that Fig. 5 shows only the steps necessary for explaining the characteristic operation of the cogeneration system of the sixth embodiment.

As shown in Fig. 5, if abnormal heat generation occurs in the inverter 3a and the temperature of the inverter 3a detected by e.g., the temperature detector 14a exceeds the upper limit value (hereinafter referred to as "permissible upper limit") of a normal temperature range, the controller 12 detects an occurrence of an abnormally high temperature in the inverter 3a of the cogeneration system 100 (Step S1). The above permissible upper limit is defined as a higher temperature than the temperature threshold value that is the criterion for determining whether the route switch 7 is to be switched to the cooler 4 side in the first embodiment.

Upon detection of an occurrence of an abnormally high temperature in the inverter 3a of the cogeneration system 100, the controller 12 outputs a shut-down command signal for executing the shut-down operation of the cogeneration system 100 (Step S2).

After the issue of the shut-down command signal for executing the abnormal shut-down operation of the cogeneration system 100, the controller 12 controls the route switch 7 so as to switch the destination of the hot water discharged from the hot water storage tank 6 to the cooler 4 side (i.e., the heat medium path 2 side) (Step S3). More concretely, since the above permissible upper limit is higher than the temperature threshold value that is the criterion for the determination as to whether the route switch 7 is to be switched to the cooler 4 side in the first embodiment, the route switch 7, which was switched to the cooler 4 in the power generating operation prior to a shift to the abnormal shut-down operation, is maintained at the cooler 4 side.

Then, the controller 12 controls the cooling water pump 10 and the hot water pump 2b to start their operations so that the exhaust heat of the cooler 4 is recovered by the hot water (Step S4). This causes the abnormally high temperature of the inverter 3a to gradually drop.

After detecting that the time taken for the recovery of the exhaust heat of the cooler 4 executed at Step S4 becomes equal to or higher than a specified time threshold value T1 (YES at Step S5), the controller 12 stops the operations of the cooling water pump 10 and the hot water pump 2b and stops the recovery of the exhaust heat of the cooler 4 (Step S6). Herein, the specified time threshold value T1 is preset in the controller 12 as the time required for the temperature of the inverter 3a provided in the electric power converter 3 to drop to a safe temperature at which the inverter 3a will not fail. If it is detected that the time taken for the recovery of the exhaust heat of the cooler 4 is less than the specified time threshold value T1 (NO at Step S5), the controller 12 then continues the recovery of the exhaust heat of the cooler 4 until the time taken for the recovery of the exhaust heat reaches the specified time threshold value T1.
Although whether the cooling operation of the electric power converter 3 is to be continued is determined depending on the operating time, it is possible to determine the continuation of the cooling operation of the electric power converter 3 based on the temperature of the electric power converter 3 or the temperature of the hot water or cooling water that has passed through the cooler 4 of the electric power converter 3, like the first, fourth and fifth embodiments.
According to the configuration of the cogeneration system of the sixth embodiment, whether or not the hot water is to be supplied to the bypass path 8 is properly determined by switching the route switch 7 based on the operational state etc. of the electric power converter 3. In the event that the inverter 3a is subjected to an abnormally high temperature condition, the exhaust heat of the cooler 4 is recovered by the hot water, which makes it possible to reduce the possibility of a failure in the electric power converter 3 under a high temperature condition. In addition, exhaust heat having a high temperature is recovered from the cooler 4, which contributes to an improvement in the energy saving performance of the cogeneration system.

### (Seventh Embodiment)

The sixth embodiment is associated with a case where, in the event of an occurrence of an abnormally high temperature in the inverter 3a, the route switch 7 is turned to the cooler 4 side to cool the cooler 4 even in the shut-down operation. However, if the same control is performed in the event of other abnormalities, the cooler 4 functions as a heat radiator and the heat saving performance of the cogeneration system 400 sometimes deteriorates when executing the circulation operation for circulating the cooling water and the hot water in the shut-down operation. To overcome this situation, the seventh embodiment is configured such that when executing the above-described circulation operation in the abnormal shut-down operation that is performed after an occurrence of an abnormality in the cogeneration system 100, the route switch 7 is properly controlled in accordance with the contents of the abnormality. The details of the seventh embodiment will be described below. The operation described below can be adopted in any of the first to fifth embodiments.

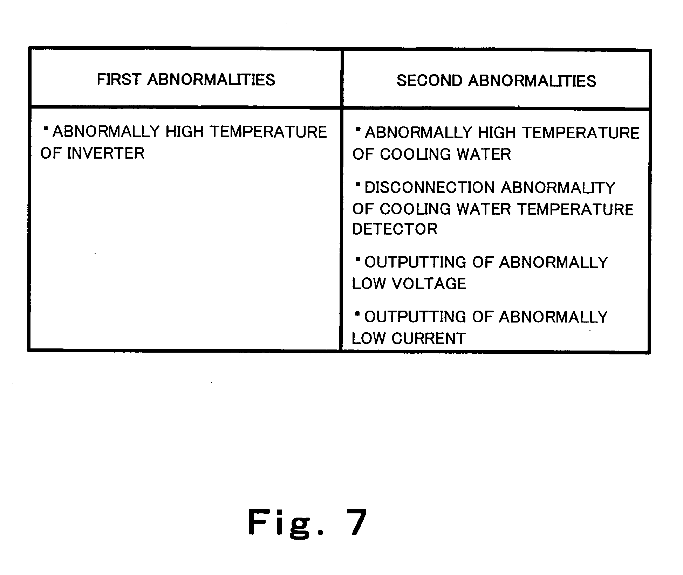

Fig. 7 is a classification chart showing, in classified form, one concrete example of first abnormalities and concrete examples of second abnormalities, these abnormalities possibly occurring in the cogeneration systems.

As shown in Fig. 7, an abnormally high temperature in the inverter 3a exemplifies the first abnormalities that could occur in the cogeneration systems 100 to 400 according to the first to fifth embodiments. The abnormally high temperature of the inverter 3a is caused such that the power semiconductor (e.g., IGBT, MOSFET) of the inverter 3a provided in the electric power converter 3 abnormally generates heat because of the deterioration of the performance of the power semiconductor, which brings the inverter 3a into an abnormally high temperature condition. In this case, if the inverter 3a in the abnormally high temperature condition is continuously operated as it is, there arises the possibility that the power semiconductor is broken because of high heat and, in consequence, the inverter 3a will fail to operate properly.

As shown in Fig. 7, examples of the second abnormalities that could occur in the cogeneration systems 100 to 400 according to the first to fifth embodiments include (i) abnormal high-temperature cooling in which the performance of the cooling water pump 10 deteriorates, causing a decrease in the flow speed of the cooling water so that the temperature of the cooling water is brought into an abnormally high temperature condition; (ii) disconnection abnormality of the temperature sensor provided in the temperature detector 14b for detecting the temperature of the cooling water that flows in the cooling water circulation path 9; (iii) outputting of abnormally low voltage in which the output electric power of the electric power converter 3 is lower than the lower limit of its normal range; and (iv) outputting of abnormally low current in which the output current of the electric power converter 3 is lower than the lower limit of its normal range.

The abnormalities listed above are detected by their respective associated defect detectors. These defect detectors are each composed of a detector (such as a cooling water temperature sensor, voltage detector or current detector) for detecting the state value (e.g., the temperature of the cooling water, and the output voltage and output current of the electric power converter) of the cogeneration system and an abnormality determination program for determining, based on the detection value obtained by the detector, whether an abnormality has occurred. The abnormality determination program is stored in a memory (not shown) built in the controller 12 and read out from the memory to be executed by an arithmetic processing unit such as a CPU.
There will be explained the characteristic operation performed in cases where either a first abnormality or second abnormality has occurred in the cogeneration system 100.

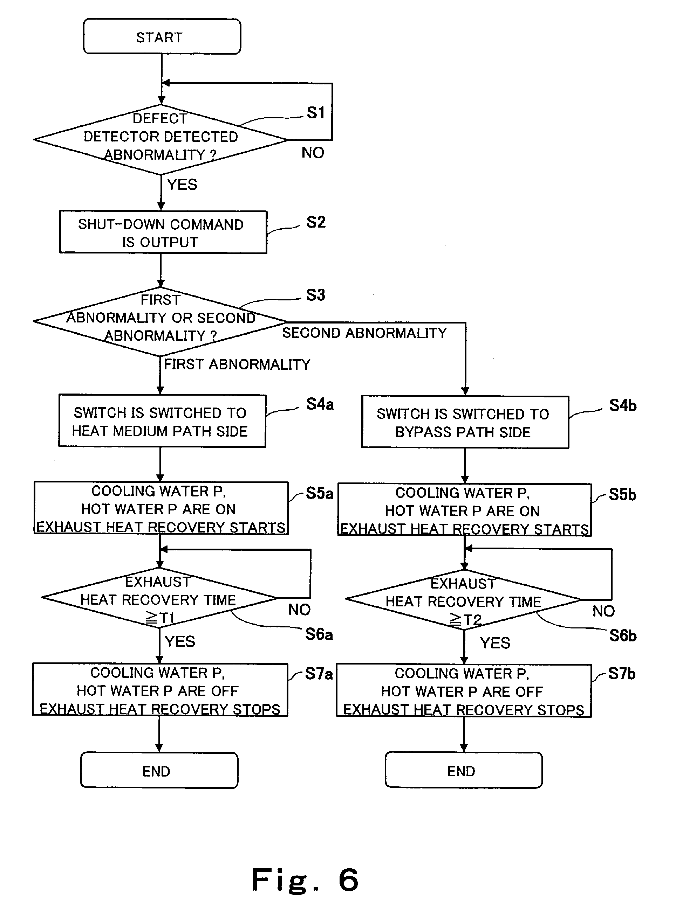

Fig. 6 is a flow chart schematically showing an operation of a cogeneration system according to the seventh embodiment of the invention. It should be noted that Fig. 6 shows only the steps necessary for explaining the characteristic operation of the cogeneration system of the seventh embodiment.

As shown in Fig. 6, if an abnormality has occurred due to any cause, the defect detector detects the abnormality (YES at Step S1). The controller 12 continuously observes whether an abnormality has occurred in the cogeneration system 100 by means of the defect detector, if no abnormality is detected at Step S1 (NO at Step S1).

If the defect detector detects an occurrence of an abnormality in the cogeneration system 100, the controller 12 then outputs a shut-down command signal to execute the abnormal shut-down operation of the cogeneration system 100 (Step S2).

After the issue of the shut-down command signal for executing the abnormal shut-down operation of the cogeneration system 100, the controller 12 determines whether the abnormality, which has occurred in the cogeneration system 100, is a first abnormality or a second abnormality (Step S3). If the abnormality is an occurrence of an abnormally high temperature in the inverter 3a, the controller 12 then determines that the abnormality is a first abnormality. On the other hand, if the abnormality is an occurrence of an abnormally high temperature in the cooling water, it is determined to be a second abnormality.

If a transition is made to the abnormal shut-down operation owing to a first abnormality, the controller 12 then controls the route switch 7 so as to switch the destination of the hot water discharged from the hot water storage tank 6 from the bypass path 8 to the cooler 4 (the heat medium path 2 side) (Step S4a).
Then, the controller 12 controls the cooling water pump 10 and the hot water pump 2b to start their operations, thereby recovering the exhaust heat of the cooler 4 with the hot water (Step S51). This causes the abnormally high temperature of the inverter 3a to gradually drop.

After detecting that the time taken for the recovery of the exhaust heat of the cooler 4 (at Step S5a) has become equal to or greater than the specified time threshold value T1 (YES at Step S6a), the controller 12 stops the operations of the cooling water pump 10 and the hot water pump 2b to thereby stop the operation of recovering the exhaust heat of the cooler 4 (Step S7a). Herein, the specified time threshold value T1 is preset in the controller 12 as the time required for the temperature of the inverter 3a provided in the electric power converter 3 to drop to a safe temperature at which the inverter 3a will not fail similarly to the sixth embodiment. Like the sixth embodiment, if it is detected that the time taken for the recovery of the exhaust heat of the cooler 4 is less than the specified time threshold value T1 (NO at Step S6a), the controller 12 then continues the recovery of the exhaust heat of the cooler 4 until the time taken for the recovery of the exhaust heat reaches the specified time threshold value T1.

On the other hand, if a transition is made to the shut-down operation of the cogeneration system 100 owing to a second abnormality that is different from the first abnormalities, the controller 12 then controls the route switch 7 so as to switch the destination of the hot water discharged from the hot water storage tank 6 from the cooler 4 (the heat medium path 2 side) to the bypass path 8 (Step S4b).
Then, the controller 12 controls the cooling water pump 10 and the hot water pump 2b to start their operations, thereby recovering the exhaust heat of the power generator 1 with the hot water and the cooling water (Step S5b).

After detecting that the time taken for the recovery of the exhaust heat of the power generator 1 (at Step S5b) has become equal to or greater than a specified time threshold value T2 (YES at Step S6b), the controller 12 stops the operations of the cooling water pump 10 and the hot water pump 2b to thereby stop the operation of recovering the exhaust heat of the power generator 1 (Step S7b). Herein, the specified time threshold value T2 is preset in the controller 12 as the time required for the power generator 1 to drop to a temperature at which the exhaust heat of the power generator 1 can be recovered by the hot water. If it is detected that the time taken for the recovery of the exhaust heat of the power generator 1 is less than the specified time threshold value T2 (NO at Step S6b), the controller 12 then continues the recovery of the exhaust heat of the power generator 1 until the time taken for the recovery of the exhaust heat reaches the specified time threshold value T2.
According to the configuration of the cogeneration system of this embodiment, when executing the circulation operation described earlier in the abnormal shut-down operation subsequent to an occurrence of an abnormality, the route switch 7 is properly controlled according to the contents of the abnormality that has occurred. This prevents a failure from occurring in the electric power converter 3 and contributes to an improvement in the energy saving performance of the cogeneration system.

### Industrial Applicability

The cogeneration system according to the invention has industrial applicability as a cogeneration system having inverter cooling configuration that enables effective utilization of energy and contributes to an improvement in the energy saving performance.

## Claims

1. A cogeneration system comprising:
a power generator;
an electric power converter configured to convert an output electric power of said power generator;
a heat medium path configured to flow said heat medium so as to recover exhaust heat from said electric power converter and from said power generator;
a bypass path configured to branch from said heat medium path, for causing said heat medium to flow so as to bypass said electric power converter;
a switch configured to switch a destination of said heat medium between said bypass path and said heat medium path;
an exhaust heat amount detector configured to detect an amount of exhaust heat of said electric power converter; and
a controller,
wherein said controller is configured to control said switch so as to switch the destination of said heat medium from said heat medium path to said bypass path, in a start-up operation, in a shut-down operation or when the amount of exhaust heat detected by said exhaust heat amount detector is smaller than a predetermined threshold value.

2. The cogeneration system as set forth in claim 1,
wherein said exhaust heat amount detector is a first temperature detector for detecting a temperature of said heat medium that has recovered the exhaust heat from said electric power converter; and
wherein said controller controls said switch so as to switch the destination of said heat medium from said heat medium path to said bypass path when the temperature detected by said first temperature detector is lower than a first predetermined temperature threshold value.

3. The cogeneration system as set forth in claim 1,
wherein said exhaust heat amount detector is a current detector for detecting an output current value from said electric power converter, and
wherein said controller controls said switch so as to switch the destination of said heat medium from said heat medium path to said bypass path when the output current value detected by said current detector is smaller than a predetermined current threshold value.

4. The cogeneration system as set forth in claim 1,
wherein said exhaust heat amount detector is an output determiner device for determining an output electric power value from said electric power converter, and
wherein said controller controls said switch so as to switch the destination of said heat medium from said heat medium path to said bypass path when the output electric power value determined by said output determiner device is smaller than a predetermined power threshold value.

5. The cogeneration system as set forth in claim 1,
wherein said exhaust heat amount detector is a second temperature detector for detecting a temperature of said electric power converter; and
wherein said controller controls said switch so as to switch the destination of said heat medium from said heat medium path to said bypass path when the temperature detected by said second temperature detector is lower than a second predetermined temperature threshold value.

6. The cogeneration system as set forth in claim 1,
wherein in a shut-down operation executed when a first abnormality in which the temperature detected by said second temperature detector exceeds a permissible upper limit, occurs, said controller controls said switch so as to make the destination of said heat medium be said heat medium path.

7. The cogeneration system as set forth in claim 1,
wherein in a shut-down operation executed when a first abnormality occurs, said controller controls said switch so as to make the destination of said heat medium be said heat medium path, and
wherein in a shut-down operation executed when a second abnormality which differs from said first abnormality occurs, said controller controls said switch so as to make the destination of said heat medium be said bypass path.

8. The cogeneration system as set forth in claim 1,
wherein said heat medium path is a path going through a cooler provided for said electric power converter and through said power generator.

9. The cogeneration system as set forth in claim 1, further comprising: a first heat medium path configured to flow a first heat medium for cooling said power generator through said power generator and a heat exchanger provided on said first heat medium path,
wherein said heat medium path is a second heat medium path that goes through a cooler provided for said electric power converter and through said heat exchanger and flows a second heat medium therein, said second heat medium receiving heat in said cooler provided for said electric power converter and in said heat exchanger.

10. The cogeneration system as set forth in any one of claims 1 to 9, wherein said power generator is a fuel cell.
